# EUROPEAN PATENT APPLICATION

(11) **EP 1 657 707 A2**
(43) Date of publication of application: **17.05.2006**
(21) Application number: 05024833.5
(22) Date of filing: 14.11.2005
(51) Int. Cl.: G09G 5/00

(54) **Data transmission terminal apparatus and data transmission method**

(30) Priority: 16.11.2004 JP 2004331832
(71) Applicant: Pioneer Corporation, Tokyo 153-8654 (JP)
(72) Inventor: Soga, Yasuke, Ohta-ku Tokyo (JP); Nohara, Manabu, Ohta-ku Tokyo (JP); Iwai, Tomoaki, Ohta-ku Tokyo (JP)
(74) Representative: Manitz, Finsterwald & Partner GbR

(57) **Abstract**

A data transmission terminal apparatus and a data transmission method for maintaining a data transmission between the terminals irrespective of the state of a clock signal associated with a transmission data packet. The data transmission terminal apparatus multiplexes an image data signal and an other data signal to generate a data packet synchronized to a reference clock signal included in the image data signal, and relays the generated data packet to a transmission path. The apparatus comprises first packet generating means for multiplexing the image data signal and the other data signal to generate an image data packet, second packet generating means for multiplexing the other data signal and dummy data to generate a dummy data packet, clock monitoring means for monitoring the reference clock signal to generate a state indicating signal indicative of the state of the reference clock signal, and output relaying means for switching between the image data packet and the dummy data packet in accordance with the state indicating signal for relaying to the transmission path.

## Description

### BACKGROUND OF THE INVENTION

### 1. Field of the Invention:

The present invention relates to a data transmission terminal apparatus and a data transmission method.

### 2. Description of the Related Art:

In DVI- or HDMI-based transmission terminal apparatuses which serve to transmit/receive image data signals through transmission paths implemented by optical fibers, coaxial cables, radio media and the like, data is transmitted in packets synchronized with a clock signal associated with image data, for example, a transmission pixel clock (Tx Pixel Clock) or the like. Data transmitted between the terminal apparatuses, i.e., not only image data signals but also a variety of monitoring control data within the apparatuses are multiplexed on image data signals as so-called user data, so that the multiplexed signals are transmitted.

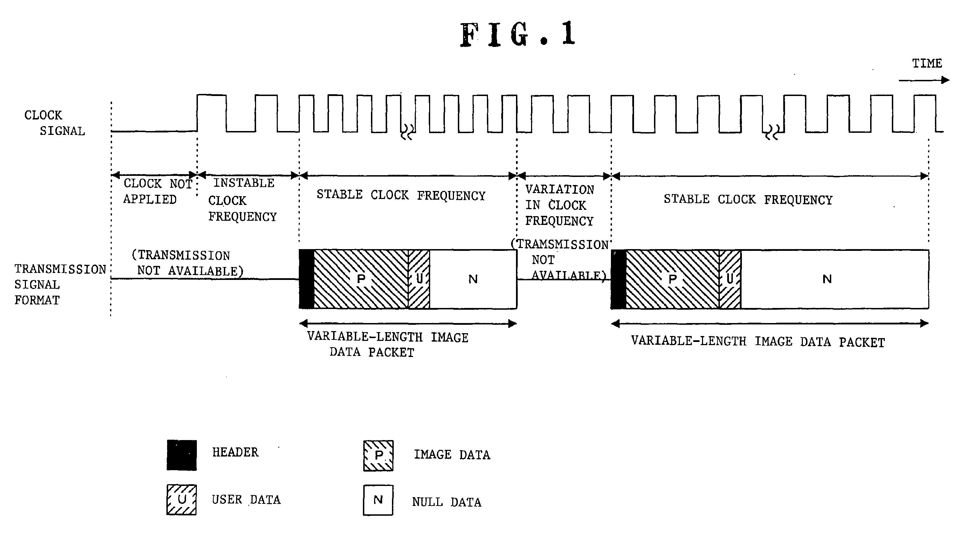

Conventional terminal apparatuses are configured to transmit data between the terminals only when the clock signal is stably supplied, as shown, for example, in Japanese Patent Kokai No. 8-251256 (Patent Document 1). Specifically, the length of an image data packet, on which an image data signal is multiplexed, is variable, as shown in a transmission signal format in a time chart of Fig. 1, and is adjusted in accordance with the frequency of a supplied clock signal. The packet contains a header indicative of attributes of the packet, an image data signal including RGB pixel signals and the like, and the user data, and so-called null (NULL) data defined, for example, by "0" or another predetermined symbol is also added to the packet to adjust the length of the packet. On the other hand, when no clock signal is supplied to the terminal apparatus, or when the clock signal is not stable in frequency, or when the frequency varies, the transmission of data between the terminal apparatuses is interrupted, as shown in Fig. 1, because of difficulties in maintaining the synchronization of the image data to the clock signal. For reference, variations in the frequency of the clock signal can be caused by a change in the image format or the like of a transmitted image data signal.

The user data, which is control monitoring information within a terminal apparatus, indicates a fault alarm or the operating status within the apparatus, and is generated asynchronously with image data signals. For this reason, the user data is preferably transmitted at all times between the terminal apparatuses even when image data signals cannot be transmitted due to instability in the state of a clock signal associated with the image data signal.

Also, in the conventional terminal apparatus, data transmission is interrupted between the terminal apparatuses when the clock signal is instable in state, so that an initial training process and the like can be required again for signal transmission/reception circuits of both apparatus, upon resumption of the data transmission after the clock signal has been stabilized, thus possibly reducing the data transmission efficiency.

### SUMMARY OF THE INVENTION

It is an object of the present invention, by way of example, to provide a transmission terminal apparatus and a data transmission method which are capable of maintaining a data transmission between the terminals irrespective of the state of a clock signal.

According to a first aspect of the present invention, a data transmission terminal apparatus for multiplexing an image data signal and an other data signal to generate a data packet synchronized to a reference clock signal included in the image data signal, and relaying the generated data packet to a transmission path, includes first packet generating means for multiplexing the image data signal and the other data signal to generate an image data packet, second packet generating means for multiplexing the other data signal and dummy data to generate a dummy data packet, clock monitoring means for monitoring the reference clock signal to generate a state indicating signal indicative of the state of the reference clock signal, and output relaying means for switching between the image data packet and the dummy data packet in accordance with the state indicating signal for relaying to the transmission path.

According to another aspect of the present invention, a data transmission method for multiplexing an image data signal and an other data signal to generate a data packet synchronized to a reference clock signal included in the image data signal, and relaying the generated data packet to a transmission path, includes the steps of multiplexing the image data signal and the other data signal to generate an image data packet, multiplexing the other data signal and dummy data to generate a dummy data packet, monitoring the reference clock signal to generate a state indicating signal indicative of the state of the reference clock signal, and switching between the image data packet and the dummy data packet in accordance with the state indicating signal for relaying to the transmission path.

### BRIEF DESCRIPTION OF THE DRAWINGS

Fig. 1 is a time chart showing how a packet signal is transmitted in a conventional data transmission terminal apparatus;
Fig. 2 is a block diagram showing the configuration of a data transmission terminal apparatus according to one embodiment of the present invention; and
Fig. 3 is an operation time chart showing how a packet signal is transmitted in the data transmission terminal apparatus of Fig. 2;

### DETAILED DESCRIPTION OF THE INVENTION

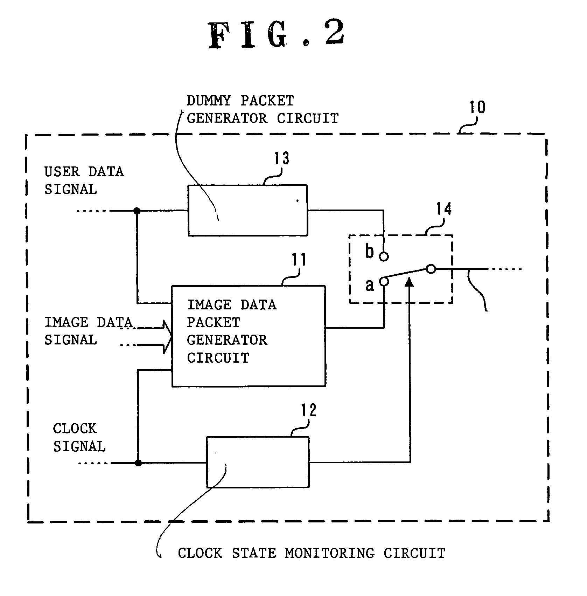

Fig. 2 shows a data transmission terminal apparatus 10 according to one embodiment of the present invention.

In Fig. 1, an image data packet generator circuit 11 is a circuit for generating image data packets based on image data signals and user data signals supplied from an image data generator circuit and a user data generator circuit (neither of which is shown) disposed in front of the terminal apparatus 10. A clock state monitoring circuit 12 is a circuit for monitoring, for example, the state of a transmission pixel clock signal (hereinafter simply called the "clock signal"), associated with the image data signal, to show the state of the clock signal.

A dummy packet generator circuit 13 is a circuit for multiplexing predetermined dummy data on the user data signal to generate a dummy data packet. An output relay circuit 14 is a circuit for switching between an output a from the image data packet generator circuit 11 and an output b from the dummy packet generator circuit 13 for relaying to a transmission path based on a clock state indicating signal supplied from the clock state monitoring circuit 12.

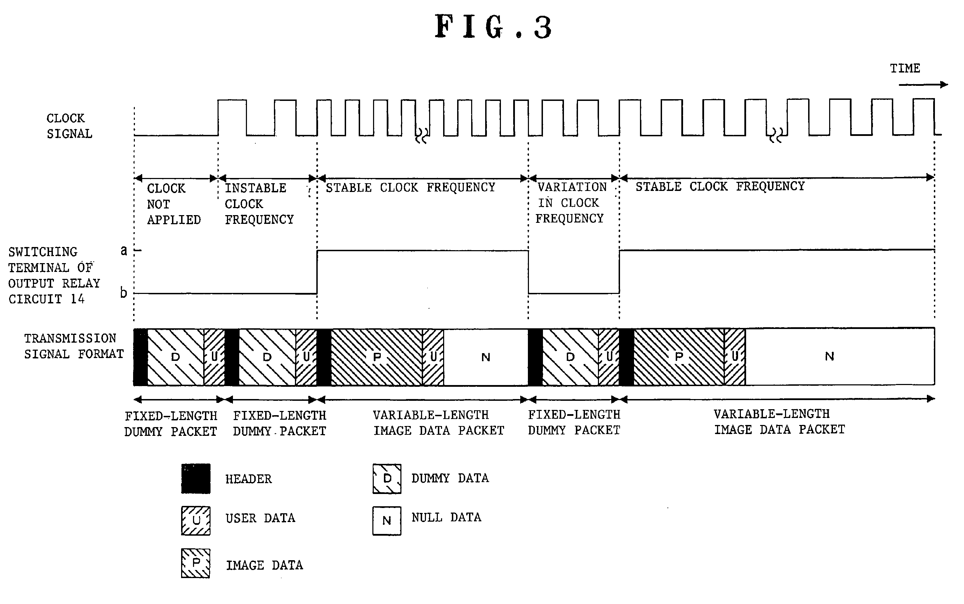

Next, the operation of the data transmission terminal apparatus 10 will be described with reference to the block diagram of Fig. 2 and an operation time chart shown in Fig. 3.

First, an image data signal is supplied from an image data generator circuit (not shown) disposed in front of the terminal apparatus 10 to the image data packet generator circuit 11. The image data signal includes each of R, G, B pixel signals, and a variety of synchronizing signals associated with the pixel signals. The image data signal is not limited in contents to the foregoing example, but may be, for example, Y, Cb, Cr components of a luminance signal, and the like.

The image data packet generator circuit 11 is supplied with a user data signal from a user data generator circuit (not shown) in front of the terminal apparatus 10. The user data signal may be, for example, monitoring information in an image data transmission system such as a signal error rate, or monitoring information in a power supply system such as a supply voltage fault alarm. In addition, the user data signal may be alarming information indicative of a rise in temperature within the housing of the terminal apparatus 10, or a defective part of a mechanism. The user data generator circuit converts a plurality of monitored items included in the information for each monitored system from a parallel form to a serial form to generate a user data signal having a predetermined bit rate, which is then supplied to the image data packet generator circuit 11.

The image data packet generator circuit 11 multiplexes the user data signal on the image data signal in accordance with a time division multiplex scheme to generate an image data packet for each time slot which is synchronized to the clock signal supplied from the image data generator circuit. The image data packet is a variable-length packet which depends on the frequency of the clock signal, so that so-called null (NULL) data defined, for example, by "0" or another predetermined symbol is added to a resulting time slot which has been filled with the image data signal and user data signal in order to adjust the packet length.

The user data signal is also supplied to the dummy packet generator circuit 13 which generates a dummy packet. The dummy packet is a fixed-length data packet which is independent of the frequency of the clock signal, and is a data packet composed of the user data signal and predetermined dummy data. For reference, a data pattern for the dummy data may be previously defined between both terminals involved in a data transmission. Alternatively, a data pattern used herein may include, for example, a multiplicity of bit changing points such as "01010..." or "10101..." in order to restrain a DC component included in a transmission signal.

It should be understood that the aforementioned image data packet and dummy packet have a header section, representing attributes of the respective packets, added to the head thereof.

The clock signal is also supplied to the clock state monitoring circuit 12 which monitors the state of the clock signal. The clock state monitoring circuit 12 monitors whether or not the clock signal is continuously applied to the terminal apparatus 10, as a matter of course, and also monitors whether or not conditions, for example, the period of repeated clock pulses, its duty ratio, and the like are stable at all times. The result of monitoring the clock signal in the clock state monitoring circuit 12 is transferred to the output relay circuit 14 as the clock state indicating signal.

The output relay circuit 14 switches between the outputs of image data packet circuit 11 and dummy packet generator circuit 13 for relaying to a transmission path based on the clock state indicating signal supplied from the clock state monitoring circuit 12. Fig. 3 is an operation time chart showing how the switching is performed.

Specifically, when the terminal apparatus 10 is not applied with a clock signal upon power-on or operation reset, or when the clock signal is instable in frequency, the clock state monitoring circuit 12 transfers the clock state indicating signal to the output relay circuit 14 for indicating that the clock signal is instable. The output relay circuit 14 responsively switches a relay contact thereof to a (b) side to relay a dummy packet, which is the output from the dummy packet generator circuit 13, for delivery to a transmission path. Then, as the operation of the terminal apparatus 10 becomes stable to make the clock signal normal, the clock state monitoring circuit 12 transfers the clock state indicating signal to the output relay circuit 14 for indicating that the clock signal is stable. The output relay circuit 14 responsively switches its relay contact to an (a) side to relay an image data packet, which is the output from the image data packet generator circuit 11, for delivery to the transmission path.

Subsequently, if the clock signal varies in frequency due to a change in the image format of the image data signal supplied from the image data generator circuit, the clock state monitoring circuit 12 transfers the clock state indicating signal to the output relay circuit 14 for indicating that the clock signal is instable. The output relay circuit 14 responsively switches once the relay contact to the (b) side to relay a dummy packet, which is the output from the dummy packet generator circuit 13, for delivery to the transmission path. Then, as the clock signal becomes stable in frequency, the clock state monitoring circuit 12 again transfers the clock state indicating signal to the output relay circuit 14 for indicating that the clock signal is stable, causing the output relay circuit 14 to responsively switch its relay contact to the (a) side to deliver an image data packet, which is the output from the image data packet generator circuit 11, to the transmission path.

As described above, the foregoing embodiment provides the data transmission terminal apparatus for multiplexing an image data signal and another data signal to generate a data packet in synchronism with a reference clock signal included in the image data signal, and relaying the data packet to a transmission path, which includes the image data packet generator circuit 11 which corresponds to first packet generating means for multiplexing the image data signal and other data signal to generate an image data packet; the dummy packet generator circuit 13 which corresponds to second packet generating means for multiplexing the other data signal and dummy data to generate a dummy data packet; the clock state monitoring circuit 12 which corresponds to clock monitoring means for monitoring the reference clock signal to generate a state indicating signal indicative of the state of the reference clock signal; and the output relay circuit 14 which corresponds to output relaying means for switching between the image data packet and the dummy data packet in accordance with the state indicating signal for relaying to the transmission path.

Then, the data transmission terminal apparatus based on the foregoing embodiment, with the employment of the foregoing configuration, can continuously transmit user data without interrupting signal transmission/reception between the terminals even if the clock signal, associated with input image data, is instable in state.

While the foregoing embodiment has been described giving a transmission pixel clock (Tx Pixel Clock) as an example of the clock signal, the present invention is not limited to this example, but another clock associated with the image data signal may be used as the clock signal. Also, the data transmitted in the variable-length packet in synchronism with the clock signal is not limited to the image data signal, but the present invention may employ an audio signal or a data time-series signal encrypted in a predetermined manner. Further, these data may be combined into a signal which may be used in the present invention.

## Claims

1. A data transmission terminal apparatus for multiplexing an image data signal and an other data signal to generate a data packet synchronized to a reference clock signal included in the image data signal, and relaying the generated data packet to a transmission path, said apparatus comprising:
first packet generating means for multiplexing the image data signal and the other data signal to generate an image data packet;
second packet generating means for multiplexing the other data signal and dummy data to generate a dummy data packet;
clock monitoring means for monitoring the reference clock signal to generate a state indicating signal indicative of the state of the reference clock signal; and
output relaying means for switching between the image data packet and the dummy data packet in accordance with the state indicating signal for relaying to the transmission path.

2. A data transmission terminal apparatus according to claim 1, wherein said image data packet can be adjusted in packet length in accordance with the frequency of the reference clock signal, and said dummy data packet has a predetermined packet length.

3. A data transmission terminal apparatus according to claim 1 or 2, wherein said other data signal is a monitoring control signal indicative of an operating state within said apparatus.

4. A data transmission terminal apparatus according to any of claims 1 to 3, wherein said reference clock signal is a transmission pixel clock included in the image data signal.

5. A data transmission method for multiplexing an image data signal and an other data signal to generate a data packet synchronized to a reference clock signal included in the image data signal, and relaying the generated data packet to a transmission path, said method comprising the steps of:
multiplexing the image data signal and the other data signal to generate an image data packet;
multiplexing the other data signal and dummy data to generate a dummy data packet;
monitoring the reference clock signal to generate a state indicating signal indicative of the state of the reference clock signal; and
switching between the image data packet and the dummy data packet in accordance with the state indicating signal for relaying to the transmission path.
